# EUROPEAN PATENT APPLICATION

(11) **EP 3 357 737 A1**
(43) Date of publication of application: **08.08.2018**
(21) Application number: 17020045.5
(22) Date of filing: 04.02.2017
(51) Int. Cl.: B60L 11/18

(54) **ELECTRIC VEHICLE EQUIPPED WITH PARTIALLY REMOVABLE BATTERY MODULES FOR DUAL USE AS TRACTION BATTERY OR ENERGY STORAGE FOR DITRIBUTED ENERGIE GENERATION**

(71) Applicant: Del Rosal Cimadevilla, Pedro Manuel, 33209 Gijon - Asturias (ES)
(72) Inventor: Del Rosal Cimadevilla, Pedro Manuel, 33209 Gijon - Asturias (ES)

(57) **Abstract**

The phenomenon known as "climate change" is driving the use of energy sources other than fossil fuels.

The technological changes driven by the struggle against it are focused in the increase of renewable energy sources and the usage of techniques without greenhouse gas emissions.

Solutions are being sought in many areas, but specially focused in the two more contaminant sectors:
a) Electricity production: focus on clean generation, especially aiming for distributed generation (DG) in housing by using photovoltaic power.
b) Road transport: The spearhead is the usage of the electric vehicle, driven by always improving, more efficient electric batteries, lower in weight and with higher energy density.

The project proposed here, allows to optimize in the most rational way the dual use of the battery, both on the EV when few energy (=autonomy) is needed, and as an energy storage element in DG installations. But not only the use of the battery is optimized, this dual function by itself optimizes the whole both systems involved: DG home system / Electric Car.

In order to achieve this duality or versatility for the EV battery, an innovative and advanced EV design is required, allowing its partial disconnection (not all the battery capacity) for subsequent fast connection to the DG system (and vice versa), done efficiently and safely for the consumer.

This project creates a new concept of electric car, with two autonomies: the basic one for daily commute using only part of the whole batteries pack, and another, the extended one, for long occasionally trips. In this way the use of clean energy is maximized for all needs of any normal family at the lowest possible cost.

## Description

### FIELD OF THE INVENTION

Electric Vehicles (cars - EV), Electric Batteries (EB), Distributed Electric Generation (DG) and Electric Self-Consumption

### BACKGROUND OF THE INVENTION

The phenomenon known as "climate change" is driving the use of alternative energy sources other than fossil fuels, known to be the main source for the emission of CO2 to the atmosphere which is responsible for the greenhouse effect that breeds global warming.

The technological changes driven by the struggle against climate change are focused in the increase of renewable energy sources and the usage of techniques without greenhouse gas emissions.

Solutions are being sought in many areas, but development in the reduction of greenhouse gas emissions is focused in the two sectors that emit the biggest amount of greenhouse gas to the atmosphere
∘ Electricity production: focus on clean means of generation, especially aiming for distributed generation in housing by using photovoltaic power in detached houses, also applicable to a lesser extent for apartments and housing blocks.
∘ Road transport: The spearhead is the usage of the electric vehicle, driven by always improving, more efficient electric batteries, lower in weight and with a higher energy density.

Both sectors have one point in common, that if used intelligently, can dramatically improve the optimization and efficiency of both systems.

### ∘ DISTRIBUTED ELECTRIC GENERATION (DG):

Somehow difficult because of the lack of a transparent, clear and fair regulation for all the actors (domestic generators, electricity distribution companies and states, that require taxes on this activity in order to finance other areas), this phenomenon will develop unstoppably once the price of the different technologies' installation, such as photovoltaic energy, are such that its amortisation period is of 4-5 years. This will predictably happen in the short term. Even so, there are countries that have already reached high levels of usage of these technologies, ensuring its future success in the wider world. This is hopeful to cease the emission of greenhouse gases in order to fight against climate change.

An aspect that still needs to be developed due to technological impediments and elevated costs is the combined use of self-production and storage. Future developments in this area can breed the definitive take-off of photovoltaic energy, that will store the electricity generated during daylight to be used throughout the rest of the day.

### ∘ ELECTRIC VEHICLES (CARs)

During the last years, we have observed the constant evolution of the electric vehicle, especially referring to its autonomy, which is boosting its sales and penetration rate. In some countries like Norway, electric vehicles stand for 20% of the vehicle fleet of the country (dec 2016).

Current autonomy, of around 150km, is reached with 20kWh batteries, with an average consumption in between 15 and 18 kwh/100km, depending on the driving style, terrain characteristics and average speed.

Most of the manufacturers are developing a new generation of EV that double and even triple the current autonomy, employing more efficient systems (permanent magnet synchronous motors and improvements in the electronic control systems) and more powerful batteries, with capacities between 40 and 60 kWh. Within the next two years (2017 and 2018) we will witness how manufacturers head in that direction (with Renault as an example, with their new model ZOE 400km, equipped with a 40kWh battery, opposed to the previous model ZOE 180km, with 20kWh)

Actually, 90% of daily car journeys are under 60-80km. Consequently, new batteries will provide consumers with extra autonomy for particular days.

### INVENTION EXPLANATION

The objective of the present invention is to create a new concept of electric car, according to the present time where sustainability and the usage of renewable energy is essential to combat climate change, where the car batteries can be used intelligently both for traction in the car and for storage energy in a DG facility, optimizing in this way the performance of both systems at the same time.

It is therefore an electric vehicle (car) in which the batteries are used intelligently, taking advantage of its modularity, depending on the required autonomy and the possibilities of energy storage at a DG home facility.

In the near future, these new complementary technologies will converge:
∘ DG systems where electricity storage is necessary to optimise the efficiency and usage of the energy captured at particular times of the day (daylight: photovoltaic, specific times: wind) at other moments.
∘ EV that will optimise its autonomies up to 300/400km that will not be required for daily use, rather for sporadic use.

The lack of energy storage methods in DG systems can be covered by the excess battery EV will be endowed with when not required, since daily commutes can be covered with a small part of the battery.

To make this happen, the design of EV according to this invention must allow
1. Rapid access and disassembling of an important part of the battery (in the case of a vehicle with 40 kWh of storage, half, 20 kWh).
2. The disassembly of the battery indicated in the previous point must be compatible with the electronic management of the VE, automatically adapting itself to the residual battery, providing at all times real information to the user (maximum autonomy available, instantaneous capacity, etc).
3. The removal of the battery pack must be designed in such a way that it is simple for any user and executable in a minimum time, 1-3 minutes. At the same time it must be done safely, both from the electrical point of view (voltage between 300 and 500 Vcc) and from the physical load point of view (approximate weight for a Li-ion battery of 20 kWh = 150 kg).
4. The requirements of the previous point will oblige to make an effort in design engineering, incorporating the necessary accessories to eliminate the indicated risks (tension and weight), while keeping the operation of both disconnection and installation of the battery pack comfortable, safe and short. It is the only way it can be legalised, meet the technical requirements and be accepted by the consumers.
5. In addition, the battery pack removed from the EV and now available for use as energy storage must be safely manipulated for connection to a DG system for its storage function.

The concepts described so far can turn out to be useful in the future. The numbers given after this, are realistic and coherent with the current technology, prove that this idea fits perfectly with the consumers' needs and may be, if applied correctly, a unique competitive advantage for the car manufacturers that in the early stages adapt this technology in the fight for the market.

| **EV Batteries** | **Value** | **Unit** |
|---|---|---|
| Standard battery | 40 | kWh |
| Average consumption | 17 | kWh/100 |
| Full autonomy (whole battery) | 235,29 | km |
| Half autonomy | 117,65 | km |
| | | |
| Half battery | 20 | kWh |
| Powerwall Tesla battery (as a comparison) | 7 | kWh |
| | | |

| **Domestic photovoltaic solution (tipical DG facility)** | | |
|---|---|---|
| Madrid, equivalent hours per year | 1632 | hours/year |
| Hours of use a day | 4,47 | hours/day |
| Hours of use a day in summer | 6 | hours/day, summer |
| Photovoltaic installed capacity per house | 5 | kW |
| Average surface | 155 | Wh/m2 |
| Theoretical required area | 32,26 | m2 |
| Real required area | 48,39 | m2 |
| Unit cost | 2,04545 | €/W |
| Total cost 5kW photovoltaic solution | 10.227,25 | € |
| | | |

| **Battery powered energy at home** | | |
|---|---|---|
| Lighting | 500 | Wh |
| Kitchen | 2000 | Wh |
| Computers/accessories | 500 | Wh |
| Heating/air conditioner | 10000 | Wh |
| Total | 13000 | Wh |
| Spare | 7000 | Wh |
| Capacity for recharging the half of the battery (remain connected in the electric car) | 37,06 | km |
| | | |

| **Daily clean/renewable energy produced and fully exploited internally (thanks to the car battery used as energy storage)** | 22.356 | Wh/day |
|---|---|---|
| Price kWh (including taxes) | 0,23 | kWh |
| Daily savings | 5,141917808 | € |
| Monthly savings | 154,2575342 | € |
| Annual savings | 1.851 | € |

From the table above, based on a typical value of excess battery (20 kWh) in and electric car and a DG typical photovoltaic installation (5 kW), it is concluded that for that case, the use is optimal to supply the needs of the house for most of the day, having at the same time excess electricity, which for the example indicated would allow the recharge of the EV battery not disassembled, for an autonomy of approximately 37 km (considering a yield of 92% in discharge of the house battery), and all of this without consuming electricity from the grid, which means an important saving for the consumer while using clean energy, both for domestic and displacement purposes. With different battery rate and power values of the DG installation, different results will be obtained, which can even improve and optimize this multi-purpose use of the EV battery.

The installation of other possible alternative energy sources such as wind power, for housing cases where it is interesting, could significantly alter the numbers shown here, significantly improving even them.

### BRIEF DESCRIPTION OF DRAWINGS

No drawings have been included in this report because the text description is considered sufficient.

### DESCRIPTION OF AT LEAST ONE WAY OF CARRYING OUT THE INVENTION

In order that this invention may be carried out in reality, a number of questions need to be resolved, which are listed below with the solution to each of them.

### ➢ EV (car) equipped with modular battery packs and with automatic electronic management according to the number of connected modules:

This embodiment has no major problems according to the current state of the art both from the point of view of the batteries and from the electronics that controls the automobile.

From the point of view of the batteries, its construction and calculations are made based on the model of electric capacitor, in which the association of batteries / capacitors in parallel has the following result: n batteries in parallel each one with a capacity of Ci result in an equivalent battery C_{equivalent}= Summation (Ci).

In fact this is how the battery packs of the current VVEEs are built but they are designed in single blocks. It would therefore be sufficient for the blocks to be modular, connected in parallel with each other, so that if one of them is disconnected, the total power capacity is reduced only in the proportional part of the module removed.

From the point of view of the electronics that controls the stored energy and therefore the available car autonomy, it is extremely easy, in other words immediate, to recognize through auxiliary contacts the battery modules that are connected in each time and from there automatically modify the parameters of stored energy and autonomy available.

However there is a critical point in its management is the reconnection to the EV of a battery module that has been previously extracted and at the time of its reconnection to the EV is at a different load level than the other existing modules previously. In order to avoid recirculation of energy between the different battery modules, which would be very detrimental to its useful life, it is essential that there is a modular electronic management of the batteries according to their physical modularity. This management can be focused in two ways: a) managing each battery module as if it were a single battery, both in charge and in discharge b) adapt the management of the packet reconnected until it is at the same level of Load than the other modules. For this, it is necessary to independently and separately manage both modules (existing and reconnected) until the level of load available in each one is the same, at which point they can be connected in parallel and proceed to a joint management of the total as if it were a single module. In fact, this problem exists (although not so critical) with the current battery packs, internally conformed by various battery modules composed in series and parallel cells or smaller batteries, and in which it is essential to maintain a homogeneity in the Load level permanently. It would therefore try to adjust the current electronic control systems on the state of charge and maintenance of the same level between the various cells or battery packs that make up the overall battery, but adapted to the problems involved in reconnecting a pack that has different level of load compared to the rest.

### ➢ EV (cars) endowed with detachable/removable modular battery packs

Although this subject has been the subject of many studies and publications, they have all been oriented towards the complete disassembly of the battery pack and its replacement by other charged ones, such as an alternative system to the fast charge by means of electrical connection to an outlet with the power sufficient (fast-loading electroliners).

The choice here is no more, therefore, that a variety of what has already been studied deeply in the past, but focused on a partial disconnection of the battery pack, dismantled one or several modules according to the distributed electric generation facility of the customer/car driving. At this point, and related to the previous one, it is important to recommend to the customer a rotation of the use between the modules to be disassembled, for example monthly, so that the wear of the same depending on their use (storage of GD or electric traction) is homogeneous, which favors the lengthening of the useful life of all the modules that make up the complete battery pack.

The specific design of each EV will therefore depend on the EV manufacturer, but it seems clear that given the already consolidated trend of placing the batteries in the central and lower part of the vehicle, to give it the highest possible stability (reducing the height of the vehicle and the center of gravity and at the same time position it in the center of the vehicle for optimal distribution of physical loads) and at the same time optimize the space used by them (batteries), the option to remove or disconnect one or more of a battery module must necessarily pass through three key points related to batteries: accessibility, weight and electrical voltage.
- Accessibility, so that there is a way to access the battery compartment by means of a suitably concealed hatch and integrated into the aesthetics and functionality of the VE, and with secure access control that prevents unwanted ones (electronic lock or similar, preferably driven from the inside).
- Weight, considering the average current energy densities of the batteries used in the EV (cars), preferably Li-ion, for a 20 kWh power battery module the estimated weight is 150 kg. The system therefore must incorporate an internal element (type system of rail with wheels) that allows the user to move towards the outside in a simple, safe and effortless form the battery module. At the same time, place it in a supporting element, also equipped with wheels, which allows it to be moved to a nearby point for its connection to the storage system of the domestic installation of DG. This supporting element can be inside or outside, and would be of the type similar to what we are accustomed to see, saving the distances, with the ambulance stretchers to transport patients.
- Electrical voltage, because it is necessary to take into account that the usual values of the voltage used in the traction of VVEE oscillates between 300 and 500 Vcc, which obviously must prevent accidental contacts with the terminals of the battery module removed. For this purpose connectors of the plug-in type must be used and in the "female" format, which will always prevent manipulation of the removed battery module from accidental contact with the live terminals. This type of connectors must be standard to guarantee the easy and safe connection to the domestic electrical production system (DG).

### ➢ Distributed Generation Systems (DG) and self-consumption facilites compatible with EV car batteries.

This point is already solved by the state of the art of the current technique for this type of installations. Simply put the example of the Tesla Powerwall battery, battery built with the same Li-ion technology as those using the EV and with a similar voltage level (350-450 Vcc), which is used for this type of systems DG and energy storage. The Vcc converters to charge these types of batteries as well as inverters to proceed with the delivery of power in home networks to the industrial frequency of 50/60 Hz have been commercially available for years.

It is clear that this invention, if put into practice, will have important advantages and attractive, both economic and environmental, for all the agents involved:
- Users: Because they will be able to satisfy their needs of individual mobility and domestic energy supply, taking advantage of the full potential of renewable energies, with a dual equipment that will allow them to maximize the performance of both systems.
- EV Manufacturers: Because it will allow them, at last and in the short term, to compete in an intelligent and decisive way against the conventional technology of combustion vehicles. The versatile use of EV batteries, with dual functionality, on the one hand as mobility and on the other hand as energy storage, is the key to this victory in an immediate period. Long before they are achieved by technological advances, batteries of energy densities much higher than the present ones, and consequently with autonomies comparable to the vehicles of combustion, that will arrive someday, but not in the short or medium term according to all the previsions of experts in this field.
- Society and the Environment: Because in the fight against climate change, the use of renewable energies on a massive scale is the only way to reduce the CO₂ content in the atmosphere and to reconcile our way of life with the environment, essential for our existence and for all the species that populate this planet, and for this purpose this invention will be a decisive impulse in the massive use of DG and the use of EV as an individual means of transport. This will imply enormous advantages and transformation of cities, as places of pacific and healthy coexistence without smoke, without emissions, without pollution and without noise

## Claims

1. Electric Vehicle (car) equipped with a partially removable modular battery pack, **characterized by** having a total set of batteries composed of two or more independent modules of batteries connected in parallel, to the rated voltage internal of the vehicle, that can be disconnected / reconnected according to the user's travel autonomy. The vehicle will have two different electric autonomies, one called "complete or extended", corresponding to the total of the set of batteries connected and another called "reduced", corresponding to the battery module that remain in the vehicle once the others have been disconnected and removed for another use different than traction (energy storage). Both autonomies will be updated and managed automatically, as well as the procedures of energy recharge (slow and fast) of the batteries connected in the vehicle when an external source is plugged, by the electronics of management and control of the vehicle in a transparent way for the user of the EV.

2. Electric Vehicle (car) according to claim 1, **characterized in that** it is immediately accessible to the housing compartment of the battery pack with a safe and convenient method for the user to enable it to disconnect, remove and transport by means of a wheeled support part of the independent battery modules for another alternative use (housing energy storage). Likewise, it is also **characterized by** allowing a safe and convenient method for the user to reintegrate the disconnected battery modules into the vehicle. The modules to be removed can be any of those that make up the total set of batteries to periodically alternate the external use of them.

3. Electric Vehicle (car) according to claim 1, **characterized in that** it is automatically controlled, by means of the vehicle control electronics, which at any time (both during the running of the car and during the recharge of the batteries) prevents the parallel operation of the existing and reconnected battery modules, until both have the same voltage and load level, in order to avoid recirculation of energy between the different modules, thus protecting the battery pack and maintaining its lifetime up to their maximum theoretical.
